# EUROPEAN PATENT SPECIFICATION

(11) **EP 2 934 101 B1**
(45) Date of publication and mention of the grant of the patent: **10.10.2018**
(21) Application number: 13824419.9
(22) Date of filing: 18.12.2013
(51) Int. Cl.: A01J 5/04

(54) **A CLAW FOR A MILKING MACHINE**
MILCHSAMMELSTÜCK FÜR MELKVORRICHTUNG
GRIFFE TRAYEUSE POUR MACHINE À TRAIRE

(30) Priority: 19.12.2012 SE 1251459; 19.12.2012 US 201261739163 P
(43) Date of publication of application: 28.10.2015
(73) Proprietor: DeLaval Holding AB, 147 21 Tumba (SE)
(72) Inventor: ANDERSSON, Anna, S-147 21 Tumba (SE); LA TORRE, Carlos, S-147 21 Tumba (SE)
(74) Representative: Lilliehorn, Tobias
(86) International application number: PCT/SE2013/051558
(87) International publication number: WO 2014/098752

(56) References cited:
- RU-C2- 2 457 675
- SU-A1- 1 523 139
- SU-A1- 1 639 537
- US-A- 3 150 637
- US-A- 6 058 880

## Description

### TECHNICAL FIELD OF THE INVENTION

The present invention refers generally to a claw, or a teatcup claw, included in a milking member of a milking machine. More specifically, the present invention refers to a so called top flow claw, where an outlet nipple, which is connected to the long milk conduit for the discharge of milk from the claw, is mounted on the top of the claw. In particular, the present invention refers to a claw according to the preamble of claim 1, see US 6,058,880 A.

See also US 3,150,637 A.

### BACKGROUND OF THE INVENTION AND PRIOR ART

US-6,058,880 discloses a claw for a milking machine. The claw comprises an enclosure having an upper part and a lower part and enclosing an inner space for a milk flow during a milking operation. The lower part comprises a bottom surface facing the inner space. A centre axis extends through the enclosure and through the upper part and the bottom surface. A plurality of inlet members are configured for receiving a respective short milk conduit of a respective teatcup and extend through the upper part to permit feeding of milk to the inner space from the respective teatcup and a respective teat of an animal to be milked. An outlet nipple is configured for being connected to a long milk conduit for the discharge of the milk from inner space.

A passage for the milk extends from the inner space to the outlet nipple. The claw also comprises a closing valve comprising a valve body, which is movable to a closed position in which the passage is closed, and to an open position in which the passage is open. A claw of a similar kind is disclosed in US-6,006,695.

The closing valve disclosed in US-6,058,880 is intended to close the passage automatically as the claw is attached to the teats of the animal to be milked. However, the functioning of the closing valve is not optimised, especially not with respect to the automatic opening and closing of the valve during various states of the milking and dishing operations. One problem with the know closing valve is connected to the interrupting of the gas flow when a teatcup is lost and when at the same time it is important to avoid a high vacuum loss.

### SUMMARY OF THE INVENTION

The object of the present invention is to provide a claw having improved properties with respect to the closing valve. In particular, it is aimed at a closing valve with a quick response.

This object is achieved by the claw according to claim 1, wherein the closing valve comprises a membrane connected to the valve body and having a rest state at which the membrane holds the valve body in an intermediate position between the open position and the closed position.
In the rest state, there is no pressure difference over the valve body, i.e. pressure in the inner space is equal to the pressure inside the outlet nipple. Thanks to this intermediate position, the valve body may be moved very quickly from the intermediate position to the closed position or to the open position. This configuration of the membrane, to take the intermediate position when the membrane is in its rest position, thus provides for a closing valve having a quick response. Consequently, a quick closing of the closing valve may be achieved when the vacuum in the inner space reaches such a low level that gas or air flow through the claw becomes unallowably high. This is advantageous when the capacity of the vacuum pump is limited.

According to the invention, the membrane is configured to move the valve body automatically to the open position, the closed position and the intermediate position. The membrane thus makes it possible to control the movements of the valve body in an automatic manner so that the valve body will move to and remain in the open position, the closed position or the intermediate position depending on the actual phase of the milking and dishing operations.

According to a further embodiment of the invention, the closing valve comprises a physical stop member defining the open position. The definition of the open position ensures a determined flow area at the valve body when it is in the open position.

According to a further embodiment of the invention, the claw comprises a suction tube connecting the inner space to the outlet nipple and forming a part of the passage. Advantageously, the suction tube may comprise a lower tube section positioned in the proximity of the bottom surface and an upper tube section. The physical stop member may then comprise at least three projections projecting into an internal space of the upper tube section of the suction tube.

According to a further embodiment of the invention, the closing valve comprises a button member connected to the valve body to permit manual moving of the valve body. Advantageously, the button member may permit manual moving of the valve body towards the open position. Such a manual moving may be provided for due to security reasons in case the automatic response of the closing valve would fail.

According to a further embodiment of the invention, the button member projects from the upper part, wherein the claw comprises a housing attached to the enclosure and enclosing the button member. Such a housing protects the button member and may function as a stop member for the movement of the button member. The housing also creates possibilities for preventing gas or air leakage from the upper part of the claw. Advantageously, the housing may then comprises a cover located outside the button member to permit the manual moving of the valve body by manual pressing of the cover.
According to a further embodiment of the invention, the housing comprises two separate channels, each having an inlet pipe and two outlet pipes for distributing a pulsating vacuum to the teatcups, and wherein the inlet pipes and the outlet pipes extend in parallel with each other.

According to the invention, a leakage channel is provided permitting a leakage flow from the inner space to the outlet nipple when the valve body is in the closed position. Thanks to the leakage channel, the pressure difference over the valve body may be reduced or removed when vacuum is applied and the valve body is in the closed position, thus permitting the membrane to reach the rest state and to move the valve body to the intermediate position. Advantageously, the closing valve comprises a valve seat against which the valve body rests in the closed position, wherein the valve seat comprises a recess forming the leakage channel .
According to a further embodiment of the invention, the membrane is configured to move the valve body to and hold the valve body in the open position when there is a milk flow through at least all of the inlet members. Advantageously, the membrane may also be configured to hold the valve body in the open position, when all the short milk conduits are closed.

According to the invention, the membrane is configured to move the valve body to and to hold the valve body in the closed position when the milk flow through one of the inlet members is interrupted. Accordingly, the membrane may move the valve body to the closed position when one of the teatcups falls off the teat. This movement may take place very quickly and will prevent air from entering the inner space of the claw. When the short milk conduit of this fallen teatcup is closed, the leakage channel may permit equalisation of the vacuum level so that the valve body may return to the open position. Furthermore, the membrane may be configured to hold the valve body in the open position during the washing operation.
According to a further embodiment of the invention, the membrane is configured to hold the valve body in the intermediate position during the application of the teatcups to the respective teats of the animal. As soon as the teatcup has been attached, the valve body may then move quickly to the open position to permit fully efficient milking. The membrane may thus be configured to hold the valve body in the intermediate position when there is no pressure difference over the valve body, for instance when the milking vacuum is shut-off.

### BRIEF DESCRIPTION OF THE DRAWINGS

The present invention is now to be explained more closely through a description of various embodiments and with reference to the drawings attached hereto.
Fig 1 shows schematically a sectional view through a claw according to a first embodiment of the invention.
Fig 2 shows schematically a sectional view through a claw according to a second embodiment of the invention.
Fig 3 shows schematically a side view of a milking member comprising a claw according to the present invention.
Fig 4 shows schematically a perspective view of a suction tube of the claw in Fig 1.
Fig 5 shows schematically a sectional view of the suction tube in Fig 4.
Fig 6 shows schematically a perspective view of a suction tube of the claw in Fig 2.
Fig 7 shows schematically a sectional view of an upper part of the claw in Figs 1 and 2.
Fig 8 shows schematically a sectional view along the line VIII-VIII in Fig 7.
Fig 9 shows schematically a sectional view of the claw according to the first embodiment with a valve body in an intermediate position.
Fig 10 shows schematically a view similar to the one in Fig 9 with the valve body in an open position.
Fig 11 shows schematically a view similar to the one in Fig 9 with the valve body in a closed position.
Fig 12 shows schematically a sectional view of the claw in Fig 9 in a washing position.

### DETAILED DESCRIPTION OF VARIOUS EMBODIMENTS OF THE INVENTION

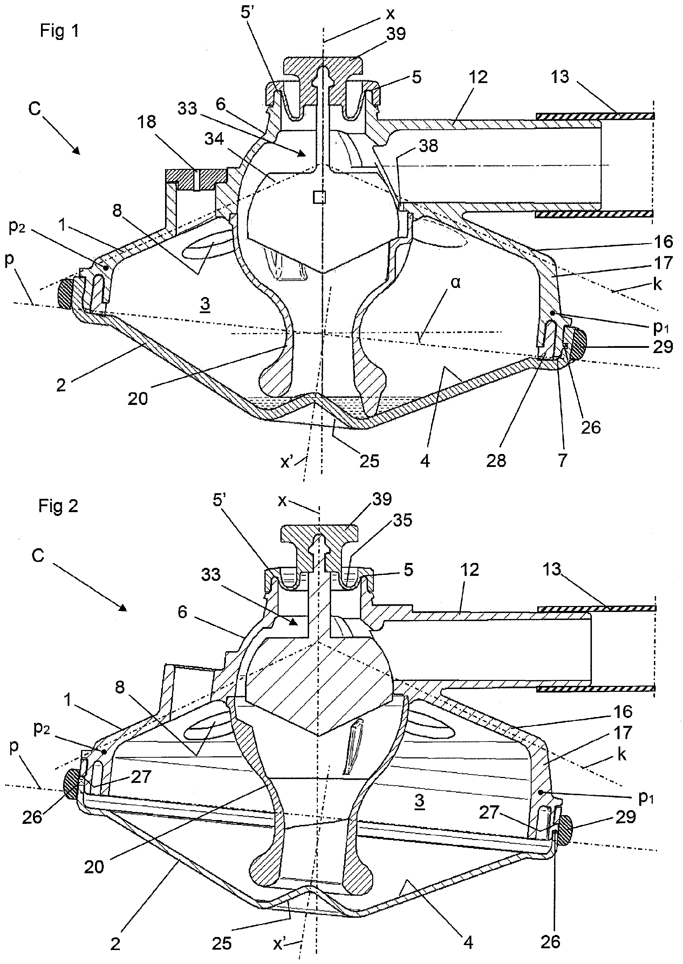

Figs 1 to 4 discloses a claw C, or a teatcup claw C, of a milking member for a milking machine. The claw C comprises an enclosure having an upper part 1 and a lower part 2. The enclosure encloses an inner space 3 for receiving milk and conveying a milk flow during a milking operation. The lower part 2 comprises a bottom surface 4 facing the inner space 3. A centre axis x extends through the enclosure and through the upper part 1 and the lower part 2. The upper part 1 comprises an upper end 5 having an annular shape and defining an upper end point 5', or an upper end plane. The upper part 1 also comprises an upper end portion 6 extending from the upper end 5. Furthermore, the upper part 1 comprises a lower annular end 7 extending along a periphery of the claw C in or at a connection plane p. The lower part 2 is detachably connected to the upper part 1 along the connection plane p.

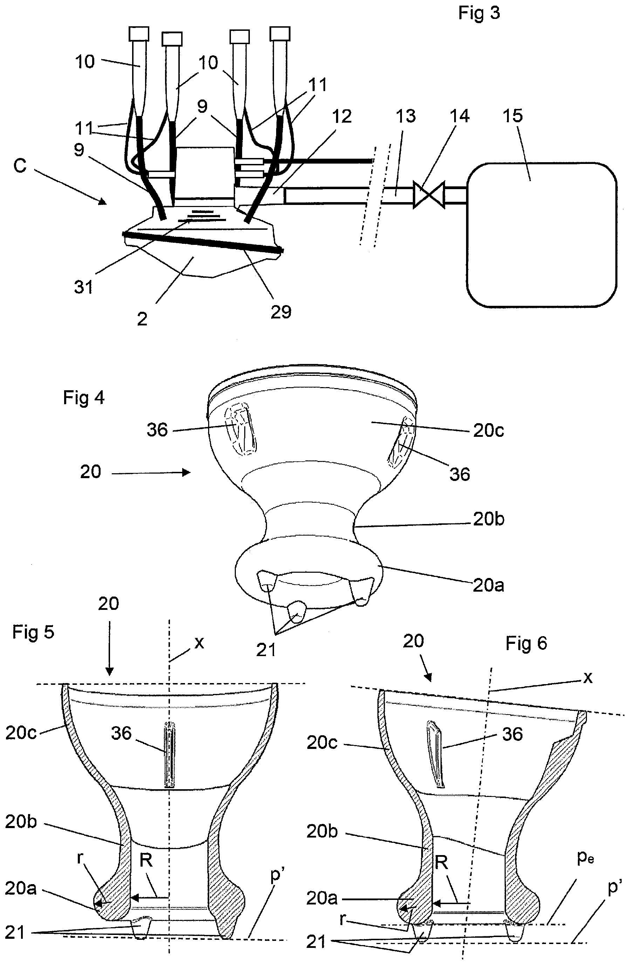

The claw C comprises a plurality of inlet members 8 configured for receiving a respective short milk conduit 9 of a respective teatcup 10 of the milking member, see Fig 3. Each teatcup 10 is configured to be attached to a respective teat of an animal to be milked during a milking operation. The milking member also comprises four short pulse conduits 11, one for each teatcup 10.

The claw C disclosed comprises four inlet members 8 which each extends through the upper part 1 to permit feeding of milk to the inner space 3 from the respective teatcup 10 and the respective teat. The claw C also comprises an outlet nipple 12 configured for being connected to a long milk conduit 13 for the discharge of milk from the inner space 3 to a milk receiving member 15 of a milking machine. The outlet nipple 12 extends outwardly with respect to the centre axis x from the upper part 1 of the enclosure. During the milking operation, milk is sucked through the teatcups 10, the short milk conduits 9 into the inner space 3 of the claw C by means of the application of a milking vacuum generated by a vacuum pump (not disclosed). From the inner space 3, the milk is then sucked through the long milk conduit 13 to the milk receiving member 15 by means of the vacuum pump. A shut-off valve 14 may be provided on the long milk conduit 13 permitting automatic shut-off of the milk vacuum between the milking operations.

The upper part 1 comprises an upper wall 16, through which the inlet members 8 extend, and a side wall 17 connected to the upper wall 16. The side wall 17 thus adjoins the upper wall 16 at an outer corner extending around the enclosure. The upper wall 16 adjoins the upper end portion 6 at an inner corner extending around the enclosure. An air inlet 18 extends into the inner space 3 from the surroundings, and in the embodiments disclosed through the upper part 1.

The upper wall 16 extends along a cone k, which is rotary symmetric around the centre axis x, see Fig 2. The side wall 17 has a varying wall height along the periphery of the claw C. More specifically, the side wall 17 has a first wall height that a first peripheral position p₁ and a second wall height at a second peripheral position p₂. The first wall height is larger than the second wall height. The first peripheral position p₁ is diametrically opposite to the second peripheral position p₂.

As can be clearly seen in Figs 1 and 2 the connection plane p is inclined with respect to the centre axis x so that the enclosure have a first height at the first peripheral position p₁ and a second height at the second peripheral position p₂, i.e. that the first height is greater than the second height. The connection plane p thus forms an angle α of inclination to a plane perpendicular to the centre axis x, or horizontal plane. The angle α may be 4-8°, for instance 6° or approximately 6°. In the embodiments disclosed, this varying height of the claw C is thus achieved by varying the wall height of the side wall 17. It is to be noted that the varying height also could be achieved by a non-rotary symmetric configuration of the upper wall 16 so that at least a part of the varying height of the claw C is achieved by the upper wall 16.

The lower part 2 is rotary symmetric with respect to an axis x' of rotation, which axis x' is perpendicular to the connection plane p see Fig 2, and thus forms an angle of indication to the centre axis x, being equal to the angle a.

The claw C also comprises a suction tube 20 which is provided in the inner space 3 and which connects the inner space 3 to the outlet nipple 12 for conveying the milk from the inner space 3 to the outlet nipple 12. The suction tube 20 comprises a lower tube section 20a, an intermediate tube section 20b and an upper tube section 20c, see Figs 4-6. The upper tube section 20c extends from an upper end of the suction tube 20 to the intermediate tube section 20b, and the intermediate tube section 20b extends from the upper tube section 20c to the lower tube section 20a. The lower tube section 20a is positioned above and in the proximity of the bottom surface 4 of the lower part 2. The suction tube 20 comprises at least one support leg 21 extending from the lower tube section 20a and abutting the bottom surface 4. The suction tube 20 may comprises more than one support legs 21, such as two or three as in the following description of the embodiments. Thanks to the support legs 21, a gap is formed between the lower tube section 20a and the bottom surface 4. Each support leg 21 has an end point. The end points of the support legs 21 are located in a common lower plane p' which is inclined to the centre axis x, and which is parallel with the connection plane p. The upper end of the suction tube 20 defines an upper plane which also is inclined to the common lower plane p'.

The suction tube 20 is a separate part which may be attached by friction to the upper part 1. The upper tube section of 20c of the suction tube 20 is tapering from the upper end to the intermediate tube section 20b to form an internal space which is a concavely shaped as can be seen in Figs 1,2 and 4-6. The upper tube section 20c has a convexly shaped outer surface. The intermediate tube section 20b is cylindrical, or substantially cylindrical. The lower tube section 20a comprises a thickened torus-shaped ring with a radius r, when seen in a cross sectional plane including the centre axis x. The suction tube 20 has an inner radius R at the lower tube section 20a. The relation r/R lies in the range 0,3 to 0,7, for instance 0,45, see Figs 5 and 6.

The suction tube 20 is shown in two variants one first variant for the first embodiments shown in Figs 1, 4 and 5, and a second variant for the second embodiment shown in Figs 2 and 6.

In the first variant, the gap between the lower tube section 20a and the bottom surface 4 has a varying height with a first height at a first position along the lower tube section 20a, and a second height at a second position along the lower tube section 20a. The second position is diametrically opposite to the first position. The first height is greater than the second height. The first position is located on the same radial line as the first peripheral position with respect to the centre axis x. The second position is located at the same radial line as the second peripheral position with respect to the centre axis x. In this variant at least one of the support legs 21 has a length that is different from the length of at least one of the other support legs 21.

In the second variant, the lower tube section 20a defines an annular end line from which the support legs 21 extend. The annular end line defines an end plane pₑ, see Fig 6, which is inclined in relation to the centre axis x. In this second variant, all support legs 21 have the same length.

The upper part 1 is at least partly made of a transparent material to enable observation of the milk flow in the inner space 3 during the milking operation. Advantageously, the whole upper part 1 may be made of the same transparent material. It is important that there is a transparent zone extending inside the first peripheral position where the side wall 17 has the largest height. The lower part 2 may be made of a plastic, transparent or non-transparent material as illustrated in Fig 1. The lower part 2 may also be made of a metallic material as illustrated in Fig 2. The lower part 2 comprises a central depression 25 extending inwardly into the inner space 3 towards the interior of the suction tube 20.

The lower part 2 is detachably connected to the upper part 1 along the connection plane p by means of a bayonet coupling as can be seen in Figs 1, 2 and 7. The bayonet coupling comprises at least two pins 26 extending from one of the upper part 1 and the lower part 2, in the present case from the upper part 1. The bayonet coupling also comprises at least two grooves 27 which in the present case thus is provided in the lower part 2, and configured to receive a respective one of the pins 26. With such a bayonet coupling, the lower part 2 may be easily detached from the upper part 1, and attached to the upper part 1. Such a bayonet coupling will also contribute to compress an annular gasket 28, see Fig 1, provided between the upper part 1 and the lower part 2 at the connection plane p, to seal the inner space 3 from the environment.

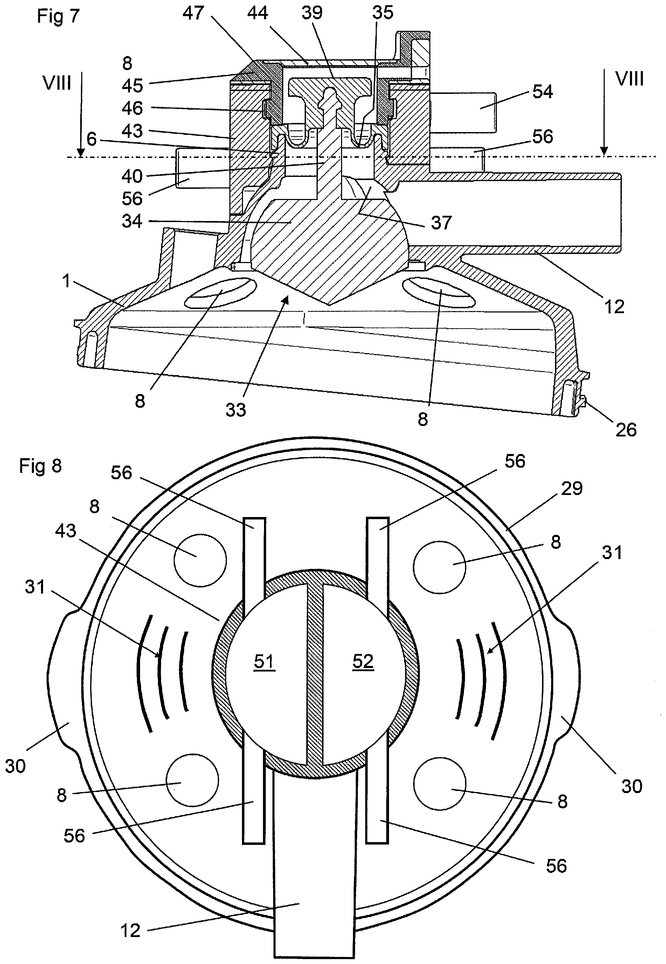

The claw C also comprises a peripheral ring 29, which extends along the periphery of the claw C at the connection plane p, see Fig 2 and 8. The peripheral ring 29 is made of an elastic material, for instance a rubber material, such as natural rubber or silicon rubber. The peripheral ring 29 comprises at least one, in the present case two, outwardly extending wings 30 positioned between the first peripheral position and the second peripheral position.

Furthermore, the upper part 1 has at least one, in the present case, two grip-facilitating patterns 31 provided on the outer surface of the upper part 1, see Figs 3 and 8. The patterns 31 are located radially inside a respective one of the wings 30. Each pattern 31 comprises three ribs on different distance from the centre axis x. The ribs extend in parallel with each other and the periphery of the enclosure.

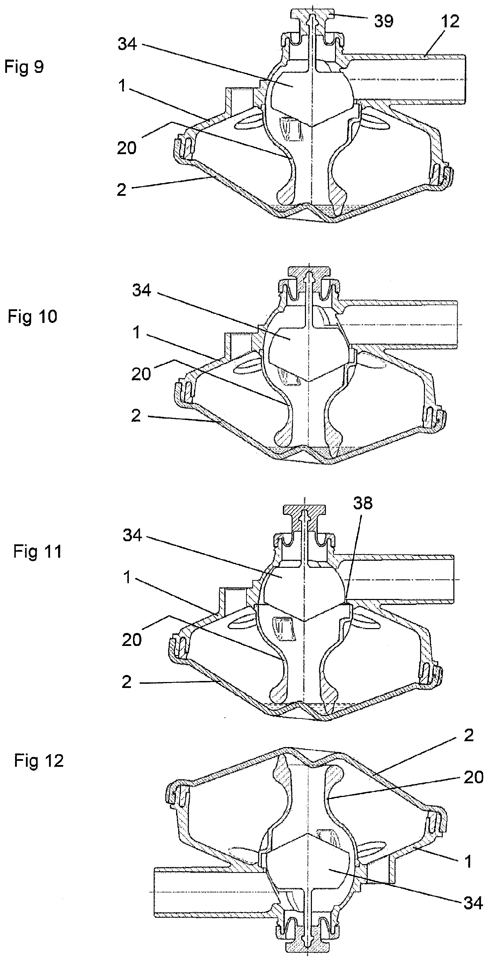

The claw C also comprises a closing valve 33, which comprises a valve body 34 provided at the upper tube section 20c of the suction tube 20. The valve body 34 is movable to a closed position, see Fig 11, in which the passage from the inner space 3 to the outlet nipple 12 is closed, and to an open position, see Fig 10, in which the passage from the inner space 3 to the outlet nipple 12 is open. The closing valve 33 also comprises a membrane 35 which is connected to the valve body 34 and attached to the upper end portion 6 of the upper part 1. The membrane 35 has a rest state, in which the membrane 35 holds the valve body 34 in an intermediate position between the open position and the closed position, see Fig 9.

In the rest state, there is no pressure difference over the valve body 34, i.e. the pressure on one side of the valve body 34, i.e. in the inner space 3, is equal to the pressure on the other side of the valve body 34, i.e. inside the outlet nipple 12. Moreover, in the rest state the membrane 35 may be in its most relaxed state with a minimum of internal tensions or stresses.

The membrane 35 is configured for automatically moving the valve body 34 to the open position, to the closed position or to the intermediate position, see Fig 9, between the open position and the closed position. Especially, the closing valve 33 and the membrane 35 is configured in such a way that the valve body 34 may be moved, or moved very quickly, from the intermediate position to the closed position or to the open position. The configuration of the membrane 35 to take the intermediate position when the membrane 35 is in its rest position thus provides for a closing valve 33 having a quick response.

When the shut-off valve 14 is closed, the membrane 35 will be in the rest state, i.e. the valve body 34 will be moved to and held in the intermediate position.

The closing valve 33 comprises a physical stop member defining the open position. In the embodiments disclosed, the physical stop member comprises at least three projections 36 projecting into the internal space of the upper tube section 20c of the suction tube 20.

The closing valve 33 also comprises a valve seat 37 defining the closed position. The valve body 34 thus rests against the valve seat 37 in the closed position.

Furthermore, a leakage channel 38 is provided for permitting a leakage flow from the inner space 3 to the outlet nipple 12 when the valve body 34 is in the closed position. In the embodiments disclosed, the leakage channel 38 is formed by a recess in the valve seat 37 as can be seen in Figs 1 and 11.

Furthermore, the closing valve 33 comprises a button member 39 connected to the valve body 34 via a rod 40. The button member 39 permits manual moving of the valve body 34, in particular towards the open position. The button member 39 projects upwardly from the upper part 1.

The claw C also comprises a housing 43, see Figs 7 and 8, which is attached to the enclosure and encloses the button member 39. The housing 43 comprises a cover 44 located outside the button member 39 to permit the manual moving of the valve body 34 by manual pressing of the cover 44.

The cover 44 is in the embodiment disclosed a part of an insert member 45 attached to an upper end portion of the housing 43 by means of a bayonet coupling 46. The insert member 45 comprises a base portion 47 to which the cover 44 is attached. The base portion 47 is made of a first material and the cover 44 is made of another, second material. The second material is resilient, or more resilient that the first material, thereby permitting the cover 44 to be elastically deformed.

The housing 43 comprises two separate channels, a first channel 51 and a second channel 52, see Fig 7. Each channel 51, 52 has an inlet pipe 54, see Fig 7, and two outlet pipes 56, see Fig 8, for distributing a pulsating vacuum to the teatcups 10. The inlet pipes 54 and the outlet pipes 56 extend in parallel with each other, and with the outlet nipple 12. The two outlet pipes 56 of the first channel 51 extend in opposite directions, as well as the two outlet pipes 56 of the second channel 52.

With reference to Fig 10, the membrane 35 is configured to move the valve body 34 to and hold the valve body 34 in the open position against the physical stop member 36, when there is a milk flow through all of the inlet members 8, i.e. during milking of the animal. The membrane 35 is also configured to hold the valve body 34 in the open position when there is no milk flow, i.e. when all the short milk conduits 9 are closed, since the pressure in the outlet nipple 12 will be lower than in the inner space 3. The teatcups 10 will be closed when all teatcups 10 are hanging downwardly, thereby bending the short milk conduits 9 to close and prevent air from entering the inner space 3 of the claw C.

With reference to Fig 11, the membrane 35 is configured to move the valve body 34 to and to hold the valve body 34 in the closed position against the valve seat 37, when the milk flow through one of the inlet members 8 is interrupted. When, for instance, one of the teatcups 10 falls off the teat, the membrane 35 is configured to move immediately, or substantially immediately, the valve body 34 to the closed position in order to prevent air from entering the inner space 3 of the claw C.

When the teatcup 10 has fallen down completely the short milk conduit 9 will be closed. Thanks to the leak flow through the leakage channel 38, vacuum or a low pressure is created in the inner space 3, permitting the membrane 35 to move the valve body 34 once again to the open position, thereby permitting milking through the three teatcups 10 remaining on the respective teats. This procedure will be repeated at least also in case a second teatcup 10 falls off the teat, and possibly also in case a third teatcup 10 falls off the teat.

With reference to Fig 9, the membrane 35 is configured to hold the valve body 34 in the intermediate position, between the closed position and the open position, during the application of the teatcups 10 to the respective teats of the animal. When the operator holds the claw C in un upright position, as illustrated in Fig 5, before the teatcups 10 are attached to the teats, the teatcups 10 will all hang down and the short milk conduits 9 will be closed. When the operator lifts the first teatcup 10, the membrane 35 will move the valve body 34 from the open position shown in Fig 12 to the intermediate position shown in Fig 9. When the first teatcup 10 is attached the membrane 35 will move the valve body back to the open position shown in Fig 10. This procedure is repeated until all four teatcups 10 have been attached to the respective teats.

The membrane 35 is thus configured to move the valve body 34 first to the intermediate position when a first teatcup 10 is lifted so that air may be sucked into the inner space 3 of the claw. Thanks to the leakage channel 38, the pressure difference over the valve body 34 will be reduced or removed when the valve body 34 is in the closed position, permitting the membrane 35 to move the valve body 34 to the intermediate position. From this intermediate position, the membrane 35 will then move the valve body 34 to the open position when said first teatcup 10 has been attached since the pressure in the inner space 3 will be reduced and become lower than the pressure in the outlet nipple 12. Consequently, the valve body 34 will, as explained above, respond quickly, i.e. open quickly when the first teatcup 10 is attached since the valve body 34 is starting from the intermediate position and thus moved only a short distance from the intermediate position to the open position.

Fig 12 shows the claw C in a up-side down position, suitable for washing of the claw C and the teatcups 10 of the milking member. The membrane 35 is configured to hold the valve body 34 in the open position during the washing operation. Before the washing operation is initiated, the milking vacuum is shut-off, for instance automatically by means of the shut-off valve 14, which means that the membrane 35 will move the valve body 34 to the intermediate position. The teatcups 10 and the claw C are positioned in the up-side down washing position, whereby the teatcups 10 are placed on suitable washing nozzles (not disclosed). The shut-off valve 14 is opened and the vacuum is applied causing the membrane 35 to move the valve body 34 to the open position so that washing liquid may be sucked and conveyed through the milking member.

The present invention is not limited to the embodiments disclosed, but may be varied and modified within the scope of the following claims.

## Claims

1. A claw (C) for a milking machine, comprising
an enclosure having an upper part (1) and a lower part (2) and enclosing an inner space (3) for a milk flow during a milking operation, wherein the lower part (2) comprises a bottom surface (4) facing the inner space (3) and wherein a centre axis (x) extends through the enclosure and through the upper part (1) and the bottom surface (4),
a plurality of inlet members (8) configured for receiving a respective short milk conduit (9) of a respective teatcup (10) and extending through the upper part (1) to permit feeding of milk to the inner space (3) from the respective teatcup (10) and a respective teat of an animal to be milked,
an outlet nipple (12) configured for being connected to a long milk conduit (13) for the discharge of the milk from inner space (3),
a passage for the milk from the inner space (3) to the outlet nipple (12), and
a closing valve (33), which comprises a valve body (34), which is movable to a closed position, in which the passage is closed, and to an open position in which the passage is open, **characterised in that** the closing valve comprises a membrane (35) connected to the valve body (34) and having a rest state at which the membrane (35) holds the valve body (34) in an intermediate position between the open position and the closed position, wherein the membrane (35) is configured to move the valve body (34) automatically to the open position, the closed position and the intermediate position, wherein the membrane (35) is configured to move the valve body (34) to and to hold the valve body (34) in the closed position when the milk flow through one of the inlet members (8) is interrupted, wherein a leakage channel (38) is provided permitting a leakage flow from the inner space (3) to the outlet nipple (12) when the valve body (34) is in the closed position.

2. A claw (C) according to claim 1, wherein the closing valve (33) comprises a physical stop member defining the open position.

3. A claw (C) according to any one of the preceding claims, wherein the claw (C) comprises a suction tube (20) connecting the inner space (3) to the outlet nipple (12) and forming a part of the passage.

4. A claw (C) according to claim 3, wherein the suction tube (20) comprises a lower tube section (20a) positioned in the proximity of the bottom surface (4) and an upper tube section (20c).

5. A claw (C) according to claims 2 and 4, wherein the physical stop member comprises at least three projections (36) projecting into an internal space of the upper tube section (20c) of the suction tube (20).

6. A claw (C) according to any one of the preceding claims, wherein the closing valve (33) comprises a button member (39) connected to the valve body (34) to permit manual moving of the valve body (34).

7. A claw (C) according to claim 6, wherein the button member (39) permits manual moving of the valve body (34) towards the open position.

8. A claw (C) according to any one of claims 6 and 7, wherein the button member (39) projects from the upper part (1) and wherein the claw (C) comprises a housing (43) attached to the enclosure and enclosing the button member (39).

9. A claw (C) according to claim 8, wherein the housing (43) comprises a cover (44) located outside the button member (39) to permit the manual moving of the valve body (34) by manual pressing of the cover (44).

10. A claw (C) according to any one of claims 8 and 9, wherein the housing (43) comprises two separate channels (51, 52), each having an inlet pipe (53, 54) and two outlet pipes (55, 56) for distributing a pulsating vacuum to the teatcups (10), and wherein the inlet pipes (53, 54) and the outlet pipes (55, 56) extend in parallel with each other.

11. A claw (C) according to any of the preceding claims, wherein the closing valve (33) comprises a valve seat (37) against which the valve body (34) rests in the closed position, and wherein the valve seat (37) comprises a recess forming the leakage channel (38).

12. A claw (C) according to any one of the preceding claims, wherein the membrane (35) is configured to move the valve body (34) to and hold the valve body (34) in the open position when there is a milk flow through all of the inlet members (8).

13. A claw (C) according to any one of the preceding claims, wherein the membrane (35) is configured to hold the valve body (34) in the intermediate position during the application of the teatcups (10) to the respective teats of the animal.

## Patentansprüche

1. Milchsammelstück (C) für eine Melkmaschine, das Folgendes umfasst:
ein Gehäuse, das ein Oberteil (1) und ein Unterteil (2) umfasst, und einen Innenraum (3) für einen Milchfluss während einer Melkoperation umschließt, wobei das Unterteil (2) eine Bodenfläche (4) umfasst, die dem Innenraum (3) zugewandt ist, und wobei eine Mittelachse (x) sich durch das Gehäuse und durch das Oberteil (1) und die Bodenfläche (4) erstreckt,
eine Vielzahl von Einlasselementen (8), die dazu ausgestaltet sind, eine entsprechende kurze Milchleitung (9) eines entsprechenden Melkbechers (10) aufzunehmen, und die sich durch das Oberteil (1) erstrecken, um zu ermöglichen, Milch von dem jeweiligen Melkbecher (10) und von einer entsprechenden Zitze eines zu melkenden Tieres in den Innenraum (3) zu leiten,
einen Auslassstutzen (12), der dazu ausgestaltet ist, mit einer langen Milchleitung (13) für den Abfluss der Milch aus dem Innenraum (3) verbunden zu werden,
einen Durchgang für die Milch von dem Innenraum (3) zu dem Auslassstutzen (12), und
ein Schließventil (33), das einen Ventilkörper (34) umfasst, der in eine geschlossene Position bewegbar ist, in der der Durchgang geschlossen ist, und in eine offene Position, in der der Durchgang offen ist,
**dadurch gekennzeichnet, dass** das Schließventil eine Membran (35) umfasst, die mit dem Ventilkörper verbunden ist (34) und die einen Ruhezustand aufweist, in der die Membran (35) den Ventilkörper (34) in einer Zwischenposition zwischen der offenen Position und der geschlossenen Position hält, wobei die Membran (35) dazu ausgestaltet ist, den Ventilkörper (34) automatisch in die offene Position, die geschlossene Position und die Zwischenposition zu bewegen, wobei die Membran (35) dazu ausgestaltet ist, den Ventilkörper (34) in die geschlossene Position zu bewegen und den Ventilkörper (34) in der geschlossenen Position zu halten, wenn der Milchfluss durch eins der Einlasselemente (8) unterbrochen wird, wobei ein Leckagekanal (38) vorgesehen ist, der einen Leckagefluss von dem Innenraum (3) zu dem Auslassstutzen (12) ermöglicht, wenn der Ventilkörper (34) sich in der geschlossenen Position befindet.

2. Milchsammelstück (C) nach Anspruch 1, wobei das Schließventil (33) ein physisches Stoppelement umfasst, das die offene Position definiert.

3. Milchsammelstück (C) nach einem der vorstehenden Ansprüche, wobei das Milchsammelstück (C) ein Saugrohr (20) umfasst, das den Innenraum (3) mit dem Auslassstutzen (12) verbindet und einen Teil des Durchgangs bildet.

4. Milchsammelstück (C) nach Anspruch 3, wobei das Saugrohr (20) einen unteren Rohrabschnitt (20a), der in der Nähe der Bodenfläche (4) positioniert ist, und einen oberen Rohrabschnitt (20c) umfasst.

5. Milchsammelstück (C) nach den Ansprüchen 2 und 4, wobei das physische Stoppelement mindestens drei Vorsprünge (36) umfasst, die in einen inneren Raum des oberen Rohrabschnitts (20c) des Saugrohrs (20) hineinragen.

6. Milchsammeistück (C) nach einem der vorstehenden Ansprüche, wobei das Schließventil (33) ein Knopfelement (39) umfasst, das mit dem Ventilkörper (34) verbunden ist, um manuelles Bewegen des Ventilkörpers (34) zu ermöglichen.

7. Milchsammeistück (C) nach Anspruch 6, wobei das Knopfelement (39) manuelles Bewegen des Ventilkörpers (34) hin zu der offenen Position ermöglicht.

8. Milchsammeistück (C) nach einem der Ansprüche 6 und 7, wobei das Knopfelement (39) aus dem Oberteil (1) herausragt und wobei der Milchsammelstück (C) eine Aufnahme (43) umfasst, die an dem Gehäuse befestigt ist und das Knopfelement (39) umgibt.

9. Milchsammeistück (C) nach Anspruch 8, wobei die Aufnahme (43) eine Abdeckung (44) umfasst, die sich außerhalb des Knopfelements (39) befindet, um das manuelle Bewegen des Ventilkörpers (34) durch manuelles Drücken der Abdeckung (44) zu ermöglichen.

10. Milchsammelstück (C) nach einem der Ansprüche 8 und 9, wobei die Aufnahme (53) zwei getrennte Kanäle (51, 52) umfasst, welche jeweils ein Einlaufrohr (53,54) und zwei Auslaufrohre (55, 56) aufweisen, zum Verteilen eines pulsierenden Vakuums hin zu den Melkbechern (10), und wobei die Einlaufrohre (53, 54) und die Auslaufrohre (55, 56) sich parallel zueinander erstrecken.

11. Milchsammeistück (C) nach einem der vorstehenden Ansprüche, wobei das Schließventil (33) einen Ventilsitz (37) umfasst, gegen den der Ventilkörper (34) in der geschlossenen Position anliegt, und wobei der Ventilsitz (37) eine Aussparung umfasst, die den Leckagekanal (38) ausbildet.

12. Milchsammelstück (C) nach einem der vorstehenden Ansprüche, wobei die Membran (35) dazu ausgestaltet ist, den Ventilkörper (34) in die offene Position zu bewegen und den Ventilkörper (34) in der offenen Position zu halten, wenn ein Milchfluss durch alle Einlasselemente (8) vorliegt.

13. Milchsammelstück (C) nach einem der vorstehenden Ansprüche, wobei die Membran (35) dazu ausgestaltet ist, den Ventilkörper (34) bei der Anbringung der Melkbecher (10) an den entsprechenden Zitzen des Tieres in der Zwischenposition zu halten.

## Revendications

1. Griffe (C) destinée à une machine à traire, comportant
une enceinte dotée d'une partie supérieure (1) et d'une partie inférieure (2) et enfermant un espace intérieur (3) destiné à l'écoulement de lait au cours d'une opération de traite, dans laquelle la partie inférieure (2) comporte une surface de fond (4) faisant face à l'espace intérieur (3) et dans laquelle un axe central (X) s'étend à travers l'enceinte et à travers la partie supérieure (1) et la surface de fond (4),
une pluralité d'éléments d'entrée (8) conçus pour recevoir un conduit de lait court respectif (9) d'un gobelet trayeur respectif (10) et s'étendant à travers la partie supérieure (1) pour permettre l'acheminement du lait vers l'espace intérieur (3) depuis le gobelet trayeur respectif (10) et un pis respectif d'un animal à traire,
un mamelon de sortie (12) conçu pour être relié à un conduit de lait long (13) destiné à l'évacuation du lait depuis l'espace intérieur (3),
un passage destiné au lait allant de l'espace intérieur (3) au mamelon de sortie (12), et
une soupape de fermeture (33), qui comporte un corps de soupape (34), et est mobile vers une position fermée dans laquelle le passage est fermé, et vers une position ouverte dans laquelle le passage est ouvert,
**caractérisée en ce que** la soupape de fermeture comporte une membrane (35) reliée au corps de soupape (34) et présentant un état de repos auquel la membrane (35) retient le corps de soupape (34) dans une position intermédiaire entre la position ouverte et la position fermée, la membrane (35) étant conçue pour déplacer automatiquement le corps de soupape (34) vers la position ouverte, la position fermée et la position intermédiaire, **en ce que** la membrane (35) est conçue pour déplacer le corps de soupape (34) vers la position fermée et retenir le corps de soupape (34) dans la position fermée lorsque l'écoulement de lait à travers un des éléments de sortie (8) est interrompu, un canal de fuite (38) étant fourni qui permet un écoulement de fuite de l'espace intérieur (3) au mamelon de sortie (12) lorsque le corps de soupape (34) est dans la position fermée.

2. Griffe (C) selon la revendication 1, dans laquelle la soupape de fermeture (33) comporte un élément d'arrêt physique délimitant la position ouverte.

3. Griffe (C) selon l'une quelconque des revendications précédentes, dans laquelle la griffe (C) comporte un tube d'aspiration (20) reliant l'espace intérieur (3) au mamelon de sortie (12) et formant une partie du passage.

4. Griffe (C) selon la revendication 3, dans laquelle le tube d'aspiration (20) comporte une section de tube inférieure (20a) positionnée à proximité de la surface de fond (4) et une section de tube supérieure (20c).

5. Griffe (C) selon les revendications 2 et 4, dans laquelle l'élément d'arrêt physique comporte au moins trois saillies (36) faisant saillie dans un espace interne de la section de tube supérieure (20c) du tube d'aspiration (20).

6. Griffe (C) selon l'une quelconque des revendications précédentes, dans laquelle la soupape de fermeture (33) comporte un élément formant bouton (39) relié au corps de soupape (34) pour permettre un déplacement manuel du corps de soupape (34).

7. Griffe (C) selon la revendication 6, dans laquelle l'élément formant bouton (39) permet un déplacement manuel du corps de soupape (34) en direction de la position ouverte.

8. Griffe (C) selon l'une quelconque des revendications 6 et 7, dans laquelle l'élément formant bouton (39) fait saillie depuis la partie supérieure (1) et dans laquelle la griffe (C) comporte un logement (43) fixé à l'enceinte et enfermant l'élément formant bouton (39).

9. Griffe (C) selon la revendication 8, dans laquelle le logement (43) comporte un couvercle (44) situé à l'extérieur de l'élément formant bouton (39) pour permettre un déplacement manuel du corps de soupape (34) par pression manuelle sur le couvercle (44).

10. Griffe (C) selon l'une quelconque des revendications 8 et 9, dans laquelle le logement (43) comporte deux canaux séparés (51, 52), chacun étant doté d'un tuyau d'entrée (53, 54) et de deux tuyaux de sortie (55, 56) destinés à distribuer un vide pulsatoire aux gobelets trayeurs (10), et dans laquelle les tuyaux d'entrée (53, 54) et les tuyaux de sortie (55, 56) s'étendent parallèlement l'un à l'autre.

11. Griffe (C) selon l'une quelconque des revendications précédentes, dans laquelle la soupape de fermeture (33) comporte un siège de soupape (37) contre lequel le corps de soupape (34) repose dans la position fermée, et dans laquelle le siège de soupape (37) comporte un renfoncement formant le canal de fuite (38).

12. Griffe (C) selon l'une quelconque des revendications précédentes, dans laquelle la membrane (35) est conçue pour déplacer le corps de soupape (34) vers la position ouverte et retenir le corps de soupape (34) dans la position ouverte lorsqu'il y a un écoulement de lait dans tous les éléments d'entrée (8).

13. Griffe (C) selon l'une quelconque des revendications précédentes, dans laquelle la membrane (35) est conçue pour retenir le corps de soupape (34) dans la position intermédiaire au cours de l'application des gobelets trayeurs (10) sur les pis respectifs de l'animal.
